(19) Europäisches Patentamt / European Patent Office / Office européen des brevets

(11) **EP 4 084 579 A1**

(12) **DEMANDE DE BREVET EUROPEEN**

(43) Date de publication:
**02.11.2022 Bulletin 2022/44**

(21) Numéro de dépôt: **22164827.2**

(22) Date de dépôt: **17.12.2003**

(51) Classification Internationale des Brevets (IPC):
**H05B 6/80** *(2006.01)* **H05B 6/62** *(2006.01)*
**B01J 19/12** *(2006.01)* **B01J 19/24** *(2006.01)*

(52) Classification Coopérative des Brevets (CPC):
**B01J 19/129; B01J 19/126; B01J 19/2465;**
**H05B 6/62; H05B 6/806;** B01J 2219/00141;
B01J 2219/00148; B01J 2219/0877;
B01J 2219/0892; Y02P 20/582

(84) Etats contractants désignés:
**AT BE BG CH CY CZ DE DK EE ES FI FR GB GR HU IE IT LI LU MC NL PT RO SE SI SK TR**

(30) Priorité: **23.12.2002 FR 0216743**

(62) Numéro(s) de document de la (des) demande(s) initiale(s) en application de l'article 76 CBE:
**03815414.2 / 1 576 857**

(71) Demandeur: **Aldivia**
**69561 Saint Genis Laval (FR)**

(72) Inventeurs:
• **CHARLIER DE CHILY, Pierre**
**60540 IRIGNY (FR)**
• **RAYNARD, Mikaele**
**69100 VILLEURBANNE (FR)**

(74) Mandataire: **Lavoix**
**2, place d'Estienne d'Orves**
**75441 Paris Cedex 09 (FR)**

(54) **SYNTHÈSE CHIMIQUE COMPORTANT UN TRAITEMENT THERMIQUE PAR CHAUFFAGE DIÉLECTRIQUE INTERMITTENT, COMBINÉ À UN SYSTÈME DE RECIRCULATION**

(57) La présente invention concerne la conception d'un procédé par chauffage diélectrique intermittent combiné à un système de recirculation.

Ce procédé consiste à soumettre les réactifs à des ondes électromagnétiques choisies dans les fréquences allant de 300GHz à 3MHz de manière intermittente à l'aide d'un système de recirculation.

Permet de traiter même les huiles absorbant peu. Grande économie d'investissement.

Ce procédé permet de travailler à différentes échelles, aussi bien à l'échelle laboratoire, semi-industrielle ou industrielle, sans perdre les avantages du chauffage diélectrique continu.

## FIGURE 1

réacteur tampon — réacteurs soumis aux ondes — applicateurs et cheminées — générateur — pompe de recirculation

EP 4 084 579 A1

EP 4 084 579 A1

**Description**

Secteur technique de l'invention et problème posé :

Quelle que soit la complexité de la molécule à fabriquer, le chimiste recherche à réduire les temps de réaction et le nombre des étapes nécessaires à la synthèse de ladite molécule dans un souci constant de rentabilité.

De nombreuses études ont été menées dans le but de maîtriser les différents paramètres pouvant influer le déroulement d'une réaction et sa vitesse. Les adjuvants tels que les solvants, les catalyseurs ont été largement exploités. Bien que ces composés dopent le milieu réactionnel, ils sont parfois toxiques pour l'homme et l'environnement et ils nécessitent des post-traitements, économiquement désavantageux tels que la neutralisation, le lavage, le séchage, la filtration.

Aujourd'hui, la tendance est aux procédés de fabrication simples, économiques, respectueux de l'homme et de son environnement.

Des procédés physiques ont été testés : l'utilisation des ultra-sons, des hautes fréquences et récemment des micro-ondes.

Les différents essais menés à l'aide du chauffage diélectrique, c'est à dire du chauffage sous fréquences micro-ondes ou hautes fréquences ont révélé l'intérêt de cette nouvelle technologie : le chauffage diélectrique permet en effet des gains de temps et d'énergie considérables, combinés à un coût d'investissement plus faible ; les réactions ne nécessitent plus l'emploi de solvant ni de catalyseur ; le 'burn-up' et les réactions indésirées sont évités.

Les applicateurs hautes fréquences et micro-ondes actuels sont nombreux mais ils sont tous configurés de manière à ce que le milieu réactionnel soit exposé en permanence aux ondes électromagnétiques pour pouvoir bénéficier des avantages incombant à cette nouvelle technologie. La quantité de matière traitée est limitée : elle dépend en effet des dimensions des guides d'onde, eux mêmes standardisés.

Résumé de l'invention :

Le demandeur a découvert un nouveau procédé de traitement thermique impliqué dans une synthèse chimique: le chauffage diélectrique intermittent combiné à un système de recirculation. Les réactifs sont soumis à des ondes électromagnétiques de manière intermittente à l'aide d'un système de recirculation. Les ondes électromagnétiques sont choisies dans les fréquences allant de 300GHz à 3MHz.

Ce procédé est original et économique : il permet de travailler à différentes échelles, aussi bien à l'échelle laboratoire, semi-industrielle ou industrielle, sans perdre les avantages du chauffage diélectrique continu.

Applications :

L'invention permet de réaliser des traitements thermiques efficaces et rapides à différentes échelles, aussi bien à l'échelle laboratoire, semi-industrielle ou industrielle.

La présente invention concerne toutes les « applications thermiques » c'est-à-dire les synthèses chimiques impliquant un traitement thermique et qui font intervenir un seul réactif, ou un mélange de réactifs, en proportions variables, avec ou sans catalyseurs, avec ou sans gaz de « process » .

En tant qu' « applications thermiques », on peut citer, à titre d'exemples non limitatifs, les réactions d'estérification, transestérification, époxydation, sulfatation, phosphitation, hydrogénation, peroxydation, isomérisation, déshydratation, quaternisation, amidification, polymérisation, polycondensation, et tous les traitements usuels comme la décoloration, la désodorisation et les autres systèmes d'élimination de composés volatils.

L'invention s'applique en fait tout particulièrement à toutes les réactions de la « lipochimie ».

Cette technique innovante permet par exemple de fabriquer des polymères d'acides gras insaturés, d'esters d'acides gras insaturés, d'hydrocarbures insaturés ou de dérivés de ces produits à l'aide d'un chauffage diélectrique intermittent sous micro-ondes. Le demandeur a déposé sur ce sujet une demande de brevet FR 98 13770 et une demande de brevet PCT WO 00/ 26265 ( PCT / FR 99 / 02646).

Art antérieur :

Le secteur technique de la présente invention concerne l'utilisation des ondes électromagnétiques micro-ondes ou hautes fréquences pour tout traitement thermique.

➢ *Les fréquences MO et HF*

Les fréquences micro-ondes MO sont comprises entre environ 300 MHz et environ 30 GHz, préférentiellement à 915 MHz (fréquence autorisée avec une tolérance de 1.4%) ou à 2.45 GHz (fréquence autorisée avec une tolérance de 2%).

Les hautes fréquences HF sont comprises entre environ 3 MHz et environ 300MHz, préférentiellement à 13.56 MHz (fréquence autorisée avec une tolérance de 0.05%) ou à 27.12 MHz (fréquence autorisée avec une tolérance de 0.6%).

> *La puissance absorbée*

La puissance absorbée Pa est fonction de la puissance incidente Pi et des pertes du système.

Pour un produit qui absorbe peu les ondes électromagnétiques et pour une puissance incidente donnée Pi, la puissance absorbée Pa diminue et les pertes augmentent, en particulier celles par électricité statique.

En effet, :

$$Pi = Pa + pertes$$

Avec :

Pi = puissance incidente en W

Pa = puissance absorbée en W

Pertes = pertes calorifiques + électricité statique

La puissance absorbée (en Watt) par un matériau sous traitement HF ou MO est donnée par la formule suivante :

$$Pa = kf\varepsilon''E^2V$$

Avec :

Pa : puissance absorbée en W.

E : champ électrique créé au sein du matériau en V/cm.

f : fréquence de l'onde

K : constante (M.K.S.A) = $5.56.10^{-13}$

V : volume du matériau en $cm^3$.

$\varepsilon''$ :facteur de pertes de matériau = $\varepsilon'$tang$\delta$

$\varepsilon'$ : permitivité relative réelle du matériau = $\varepsilon_0{}^*\varepsilon_r$

$\varepsilon_0$ : permitivité du vide

$\varepsilon_R$ : constante diélectrique

tang$\delta$ : angle de pertes

$\varepsilon'$ traduit l'aptitude d'un matériau à s'orienter dans le champ et tang$\delta$ sa capacité à dégager de la chaleur.

Remarque : pour l'air ou le vide, $\varepsilon'$ = 1 (valeur la plus faible pour $\varepsilon'$) et tang$\delta$ = 0, soit $\varepsilon''$=0.

> *type d'applicateurs d'énergie*

Le choix du type d'applicateur d'énergie dépend de la technologie utilisée (hautes fréquences ou micro-ondes), des caractéristiques dimensionnelles du produit à traiter et de son mode de traitement.

Pour les applicateurs hautes fréquences, il s'agit essentiellement :

- d'applicateurs de type capacitif formés de deux armatures de condenseur entre lesquelles est appliquée la tension haute fréquence du générateur. Ils sont utilisés pour le traitement thermique de matériaux dont le volume constitue un parallélépipède dont l'un des côtés est suffisamment épais (>1 0mm).

- d'applicateurs à barreaux pour matériaux plans, constitués d'électrodes tubulaires ou en barres. Ils sont utilisés pour le traitement thermique de matériaux dont le volume constitue un parallélépipède dont l'un des côtés n'est pas suffisamment épais (<10mm).

- d'applicateurs pour matériaux filiformes, formés de boucles.

Pour les applicateurs micro-ondes, on peut citer :

- les applicateurs à champ localisé : cavité monomodale

- les applicateurs à champ diffus : cavité multimodale

- les applicateurs à champ proche : guide à antennes rayonnantes Parmi ces applicateurs micro-ondes, il existe sur le marché par exemple :

- le synthewave 402 et le synthewave 1000 qui sont constitués de réacteurs de 1mL à 100ml ou 600mL.

- le Discover avec des réacteurs de 1 à 125mL

- l'Ethos MR de capacité inférieure à 400mL

➢ *risques de claquage ou arcs électriques*

Le Demandeur a déposé une demande de brevet FR N°0108906 concernant un appareillage perfectionné pour la mise en œuvre du chauffage diélectrique. Dans ledit brevet, l'invention concerne une nouvelle forme ou géométrie de cheminée, notamment une cheminée de forme ou géométrie conique, qui permet de chauffer tout type de produit sous fréquences micro-ondes ou hautes fréquences, en statique ou en dynamique avec une densité de puissance importante sans risque d'arcs électriques ou « claquage ».

L'homme de l'art pourra s'y reporter pour plus de détails. Pour sa convenance, en voici un résumé :

- Dans le cas des molécules peu absorbantes, le choix des applicateurs est compliqué. L'applicateur doit en effet transmettre beaucoup d'énergie électromagnétique au produit pour qu'il puisse chauffer tout en évitant les arcs électriques.

- Le chauffage sous fréquences micro-ondes est préféré aux hautes fréquences pour lesquelles le risque de claquage est plus grand.

- Le système « monomode » (champ localisé) qui est formé de cavités mono-modes résonnant à la fréquence d'émission selon un rayonnement dans le sens du guide, est préféré au « multimode » (champ diffus). Le système monomode évite une distribution non homogène du champ électrique et la présence de points chauds. De la même manière, ce type de réacteur favorise la stabilité des produits exposés.

- L'applicateur monomode muni de cheminées cylindriques usuelles, le mieux adapté parmi tous les applicateurs usuels aux molécules peu absorbantes, ne permet pas de travailler avec une forte densité de puissance sans risque de claquage.

- Introduire dans le milieu réactionnel des composés polaires tels que l'eau, pour jouer le rôle d'intermédiaire de transfert d'énergie et réduire ainsi la densité de puissance nécessaire n'est cependant pas satisfaisant. Des réactions secondaires non désirées peuvent avoir lieu, des traitements supplémentaires tels que la neutralisation, le lavage, le séchage ou la filtration peuvent être nécessaires pour purifier le produit en fin de réaction.

- Une alternative pour pallier les problèmes liés aux composés peu absorbants, consiste à évacuer l'électricité statique au fur et à mesure qu'elle se forme sur la paroi externe du réacteur. Pour évacuer l'électricité statique, il faut soit favoriser une bonne ventilation par de l'air humide ou par un autre gaz comparable au niveau de ses constantes diélectriques (exemple : hexafluorure de souffre SF6 sous 1 bar) (1ère solution), soit adapter les formes des cheminées de manière à aérer ces dernières (2ème solution). La première solution ne semble pas avantageuse pour des raisons de complexité d'installation, de sécurité et de coût.

- Le Demandeur a découvert une nouvelle forme ou géométrie de cheminée, notamment cheminée conique, qui permet de chauffer tout type de produits sous des fréquences micro-ondes ou hautes fréquences, en statique ou en dynamique, avec une densité de puissance importante sans risque d'arcs électriques ou « claquage ».

Description de l'invention :

Le demandeur a découvert un nouveau procédé de traitement thermique qui consiste à soumettre le réactif, seul ou en mélange, à des ondes électromagnétiques de manière intermittente, à l'aide d'un système de recirculation.
Les ondes électromagnétiques sont choisies dans les fréquences allant de 300GHz à 3MHz.
Ce procédé conserve les avantages du chauffage diélectrique permanent tout en augmentant la capacité de production.

➢ Description du matériel

Le procédé par chauffage intermittent est simple et économique. Il est constitué :

- de pompes

- de réacteurs soumis au champ électromagnétique

- d'un système diélectrique : applicateurs cheminées, guides d'ondes générateur, iris, piston de court circuit, systèmes de refroidissement

- de réacteurs tampon

- de bacs

- d'un circuit de gaz, préférentiellement de gaz inerte tel que l'azote

- de condenseurs

- d'appareils de mesure

Les pompes

La ou les pompes sont à débit variable.
Il peut s'agir de pompe doseuse d'alimentation et/ou de pompe de recirculation et/ou de pompe à vide. Le débit de la pompe de recirculation influe sur le temps de passage d'une molécule sous les ondes.
Les pompes peuvent être choisies à titre indicatif parmi les pompes à palettes ou à piston.

Les réacteurs soumis au champ électromagnétique

Les réacteurs soumis au champ électromagnétique n'absorbent pas les ondes (pyrex, quartz...).
Ils sont traditionnellement de forme cylindrique.
Ils sont positionnés à l'intérieur des applicateurs.

Système diélectrique : applicateurs cheminées, guides d'ondes générateur, iris. piston de court circuit, systèmes de refroidissement

Les applicateurs sont formés de cavités monomodes qui résonnent à la fréquence d'émission selon un rayonnement dans le sens du guide d'onde.
Les cheminées empêchent les fuites d'ondes vers l'extérieur du guide d'onde. Elles sont préférentiellement de forme cylindrique conique, comme indiqué dans la demande de FR N°0108906 du présent Demandeur pour limiter la présence d'arcs électriques.

Le ou les guides d'onde véhiculent les ondes électromagnétiques. Chaque guide d'onde peut être subdivisé en deux et seulement deux guides d'ondes.

Les générateurs utilisés sont des générateurs micro-ondes ou hautes fréquences

Les fréquences micro-ondes MO sont comprises entre environ 300 MHz et environ 30 GHz, préférentiellement à 915 MHz (fréquence autorisée avec une tolérance de 1.4%) ou à 2.45 GHz (fréquence autorisée avec une tolérance de 2%).

Les hautes fréquences HF sont comprises entre environ 3 MHz et environ 300MHz, préférentiellement à 13.56 MHz (fréquence autorisée avec une tolérance de 0.05%) ou à 27.12 MHz (fréquence autorisée avec une tolérance de 0.6%).

Les générateurs sont munis d'organe de sécurité qui laisse passer les ondes incidentes et fait dériver les ondes réfléchies vers une charge à eau où les ondes sont absorbées

Ils nécessitent également l'usage d'iris, de piston de court circuit pour atténuer la puissance réfléchie et favoriser l'absorption de la puissance émise par le générateur par le mélange réactionnel.

Le système est muni de systèmes de refroidissement pour éviter toute surchauffe.

Les réacteurs tampon

Les réacteurs tampon permettent de traiter une plus grande quantité de mélange réactionnel.

Les bacs

Le système est muni de bac(s) d'alimentation, de bac(s) recette, de bac(s) de filtration.

Les circuits de gaz

Les traitements thermiques sont réalisés sous une atmosphère normale ou riche en oxygène ou de préférence inerte.

Les appareils de mesure

Le système est équipé d'appareils de mesure tels que des manomètres, des thermocouples, des débitmètres.

Ce procédé peut être utilisé en dynamique ou continu.

➢ Principe du chauffage intermittent

Tout le volume réactionnel n'est pas exposé en permanence aux ondes mais toutes les molécules du mélange réactionnel sont de manière intermittente soumises au champ.

Différentes configurations sont envisageables pour mettre en œuvre un chauffage diélectrique intermittent.

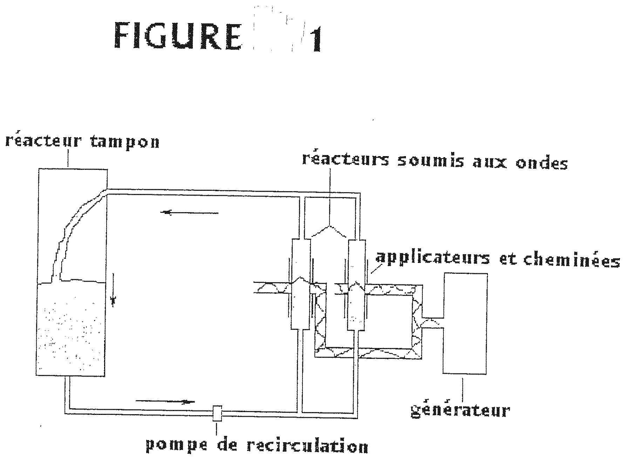

La première est de soumettre plusieurs réacteurs aux ondes électromagnétiques. Voir figure n°1

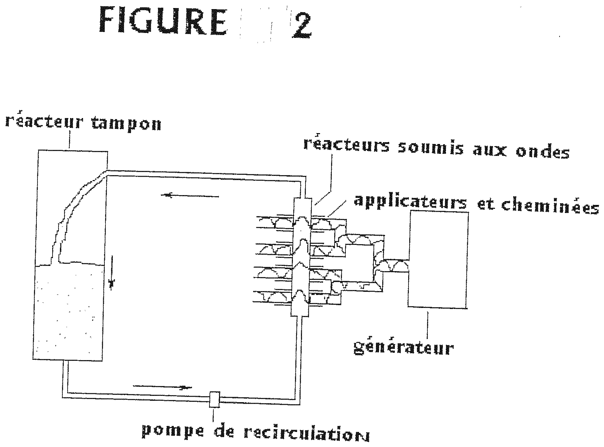

La seconde est d'utiliser plusieurs applicateurs d'énergie sur un même réacteur. Voir figure n°2

Le nombre d'applicateurs dépend de la température à laquelle on souhaite travailler, de la quantité de produit à traiter, du temps de montée à la température réactionnelle, des constantes diélectriques des réactifs.

L'homme de l'art comprendra que ces deux configurations ne sont pas les seules possibles et que l'invention concerne toutes les autres positions intermédiaires.

En plus, le demandeur a trouvé un système original qui consiste à faire circuler le mélange réactionnel en boucle, réduisant ainsi les coûts d'investissement à capacité de production équivalente. Sans ce système de recirculation, il faudrait en effet utiliser un réacteur de grandes dimensions et une multitude d'applicateurs pour arriver à chauffer la même quantité de produits et arriver au résultat souhaité, ce qui entraînerait des coûts énormes.

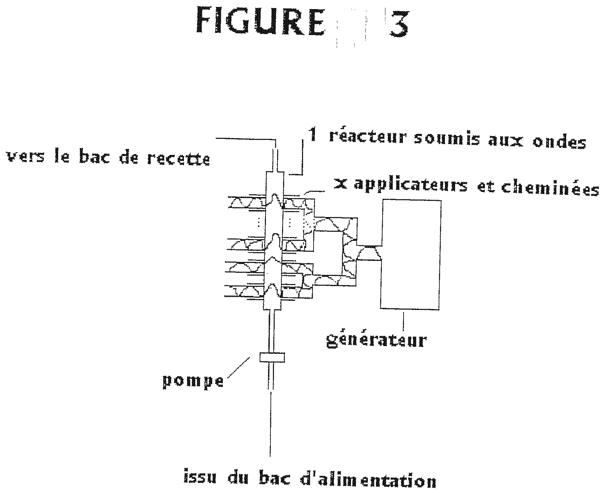

Voir figure n°3

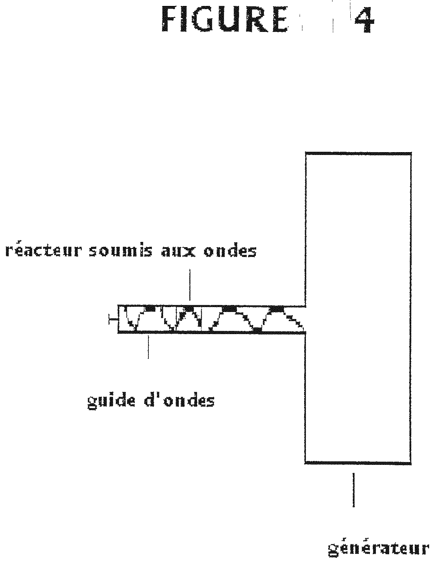

Le chauffage diélectrique intermittent combiné à un système de recirculation permet d'augmenter les capacités de production, limitées avec le système de chauffage diélectrique permanent, représenté sur la figure n°4 ou la figure n°3 si les applicateurs recouvrent tout le volume à traiter.

Ce procédé peut être utilisé en dynamique ou continu.

Selon cette configuration, tout le volume réactionnel n'est pas exposé en permanence aux ondes mais toutes les molécules du mélange réactionnel sont de manière intermittente soumises au champ.

Il est à noter que, selon ce principe, l'invention n'aurait logiquement pas dû fonctionner, c'est-à-dire n'aurait logiquement pas dû produire de bons résultats. En effet, une molécule sera soumise aux ondes électromagnétiques seulement durant une fraction de son temps de circulation, par exemple 1s toutes les 10 s. Tout homme de métier comprend que cela aurait dû produire des résultats soit très faibles (procédé inefficace) soit nuls : or , de manière surprenante, on obtient au contraire de très bons résultats, cf. ci-dessous, et avec les avantages importants également mentionnés ici.

➢ Volume exposé au champ électromagnétique

Le volume exposé au champ électromagnétique est calculé selon la formule ci-dessous :

$$V \text{ (exposé au champ)} = \Pi * R^2 * H$$

Avec :

R = rayon du réacteur exposé au champ

H = hauteur du réacteur exposé au champ..

Paramètre H :

La hauteur du réacteur exposé au champ correspond traditionnellement à celle du guide d'onde pour permettre de traiter en une seule fois le maximum de matière

Prenons le cas de traitements thermiques sous micro-onde monomode, à 2450MHz. La hauteur du guide d'onde en mode TE 0.1 (Transverse Electrique) vaut 45mm. Le mode fondamental d'excitation TE 0.1 permet à l'onde de se propager selon une seule arche, contrairement au mode TE0.2 qui présente deux maxima de champ, impliquant un chauffage moins homogène.

Prenons le cas de traitements thermiques sous micro-onde monomode, à 915Hz. La hauteur du guide d'onde est égale dans ce cas à 124 mm.

Paramètre R

Le réacteur est traditionnellement de forme cylindrique. Son diamètre ne peut pas dépasser la largeur du guide d'onde.

Dans le cas des applicateurs micro-onde monomode, sous 2450MHz, la largeur du guide d'onde préconisée pour rester en mode TE 0.1 (Transverse Electrique) se situe entre 70 et 100 mm environ, et plus particulièrement à 90mm.

Dans le cas des applicateurs micro-onde monomode, sous 915MHz, la largeur du guide d'onde préconisée pour rester en mode TE 0.1 (Transverse Electrique) se situe vers 250mm.

➢ Avantages du chauffage diélectrique intermittent

Contrairement aux systèmes diélectriques usuels, la présente invention permet de manière surprenante de chauffer des volumes de matières à l'échelle industrielle tout en gardant le procédé économique. Pour cela, il a conçu un procédé par chauffage diélectrique intermittent, combiné à un système de recirculation.

Le Demandeur démontre par cette présente invention que les réactifs bénéficient des avantages incombant à la technologie des ondes électromagnétiques, sans être exposés en permanence au champ. En effet, les bénéfices du chauffage diélectrique sont conservés :

1- temps de réaction réduit de manière significative;

2- réaction réalisée en une seule étape;

3- non utilisation de solvant ;

4- économie d'énergie (car les temps sont significativement plus courts) ;

5- absence de "burn-up" et de sous-réactions.

*Réactifs :*

Pour la présente invention, le ou les réactifs peuvent être choisis parmi les produits absorbants peu les ondes électromagnétiques ou les produits absorbants beaucoup ou un mélange des deux, additivés ou non d'un ou de plusieurs catalyseurs ou adjuvants absorbant peu ou beaucoup et/ou de gaz de process.

➢ *huiles d'origine végétale*

En tant qu'huiles d'origine végétale, on peut mentionner, entre autres, l'huile de colza, l'huile de tournesol, l'huile d'arachide, l'huile d'olive, l'huile de noix, l'huile de maïs, l'huile de soja, l'huile de lin, huile de carthame, huile de noyaux d'abricot, l'huile d'amande douce, l'huile de chanvre, l'huile de pépins de raisin, l'huile de coprah, l'huile de palme, l'huile de graine de coton, l'huile de babassu, l'huile de jojoba, l'huile de sésame, l'huile d'argan, l'huile de chardon marie, huile de pépins de courge, huile de framboise, l'huile de Karanja, l'huile de Neem, l'huile d'oeillette, l'huile de noix du Brésil, l'huile de ricin, l'huile de ricin déshydratée, l'huile de noisette, l'huile de germe de blé, l'huile de bourrache, l'huile d'onagre, l'huile de Tung, l'huile de tall ou « tall oil ».

➢ *huiles ou graisses d'origine animale*

En tant qu'huiles ou graisses d'origine animale, on peut citer entre autres, l'huile de cachalot, l'huile de dauphin, l'huile de baleine, l'huile de phoque, l'huile de sardine, l'huile de hareng, l'huile de squale, l'huile de foie de morue, l'huile de pied de bœuf, les graisses de bœuf, de porc, de cheval, de mouton (suifs).

➢ *composants d'huiles animales ou végétales*

On peut également utiliser des composants d'huiles animales ou végétales tel que le squalène extrait des insaponifiables des huiles végétales (l'huile d'olive, l'huile d'arachide, l'huile de colza, l'huile de germe de maïs, l'huile de coton, l'huile de lin, l'huile de germe de blé, l'huile de son de riz) ou bien contenu en grande quantité dans l'huile de squale.
Ces huiles et graisses d'origine animale ou végétale, ainsi que leurs dérivés, peuvent subir un traitement préalable visant à les rendre plus réactifs ou au contraire moins réactifs. L'invention concerne aussi bien un réactif isolé qu'un mélange réactionnel comportant deux ou plusieurs composants. Ces mélanges réactionnels peuvent comporter des proportions équivalentes de chaque composant ou certains composants peuvent être majoritaires.

➢ *hydrocarbures*

En tant qu'hydrocarbures insaturés, on peut citer, seul ou en mélange, et à titre d'exemples non limitatifs, un alcène, par exemple un ou des hydrocarbures terpéniques, c'est à dire un ou des polymères de l'isoprène, ou un ou des polymères de l'isobutène, du styrène, de l'éthylène, du butadiène, de l'isoprène, du propène, ou un ou des copolymères de ces alcènes.
En tant qu'hydrocarbures saturés, on peut citer, entre autres, les alcanes, par exemple l'éthane, le propane.

➢ *esters saturés et/ou insaturés*

En tant qu'esters d'acides gras saturés et/ou insaturés, on peut utiliser seul ou en mélange et à titre d'exemples non limitatifs, un ou des esters obtenus par estérification entre un monoalcool et/ou polyol et au moins un acide gras saturé et/ou insaturé ; des cires ; des beurres, des phospholipides ; des spingolipides ; des glucolipides.

➢ *acides saturés et/ou insaturés*

En tant qu'acides gras insaturés, on peut utiliser, seul ou en mélange, et à titre d'exemples non limitatifs, un ou des acides saturés comme l'acide caprylique, l'acide laurique, l'acide myristique, l'acide palmitique, l'acide stéarique, l'acide arachidique, l'acide béhénique, l'acide lignocérique, l'acide cérotique, un ou des acides gras monoinsaturés comme l'acide oléique, l'acide palmitoléique, l'acide myristique, l'acide pétrosélénique, l'acide érucique ; un ou des acides gras polyinsaturés comme par exemple l'acide linoléique, les acides alpha et gamma linolénique, l'acide arachidonique ; l'EPA acide eicosapenten-5c- 8c-11c-14c-oïque, le DHA acide dodosahexen-4c-7c-10c-13c-16c-19c-oïque, un ou des acides comprenant des diènes conjugués ou des triènes conjugués comme l'acide licanique, les isomères des acides linoléiques et linoléniques ; un ou des acides comprenant un ou plusieurs groupes hydroxyles comme l'acide ricinoléique.

> *alcools*

Comme alcools, on peut mentionner, entre autre, le glycérol, le sorbitol, le sucrose, le mannitol, le xylitol, le néopentylglycol, le pentaérythritol, le saccharose, la galactose, le glucose, le maltose, le maltotriose, le fructose, le maltitol, le lactitol, le lactose, le ribose, le mellibiose, le cellobiose, le gentiobiose, l'altrose, le gulose, les polyalkylèneglycols, les polyglycérols, les polyphénols, les alkylpolyglucosides, les polyglucosides, le glycol, le pentaérythritol, l'éthane 1,2 diol, le 1,4 butanediol, 1,6 hexanediol, les aminoalcools (par exemple la diéthanolamine DEA la triéthanolamine TEA, 3-amino 1,2 propanediol), les époxyalcools, les alcools gras saturés ou insaturés (exemple : myristyl alcool, oleyl alcool, lauryl alcool), les alcools linéaires ou ramifiés, les vitamines (par exemple tocophérol, acide ascorbique, rétinol), les stérols (dont les phytostérols), les hémiacétals (par exemple 1-éthoxy -1-éthanol), les aminoalcools (par exemple 2-2'-amino éthoxy éthanol), les époxyalcools (par exemple 2-3 époxy-1-propanol), le propanol, l'éthanol, le méthanol, le tétradécyl alcool et leurs analogues

Les alcools ainsi que leurs dérivés peuvent subir un traitement préalable visant à les rendre plus réactifs ou au contraire moins réactifs comme par exemple l'hydrogénation, l'hydroxylation, l'époxydation, la phosphitation, lasulfonation.

> *époxydes*

En tant qu'époxydes, on peut utiliser seul ou en mélange et à titre d'exemples non limitatifs, l'acide vernolique, l'acide cooronarique, 1,2-epoxy-9-décène, 3-4 époxy-1-butène, 2-3 époxy-1-propanol, des esters gras obtenus par estérification entre 2-3 époxy-1-propanol et un acide gras (par exemple Cardura E10®).

> *aminoalcools*

En tant qu'aminoalcools, on peut utiliser seul ou en mélange et à titre d'exemples non limitatifs, la monoéthanolamine MEA, la diéthanolamine DEA la triéthanolamine TEA, 3-amino 1,2 propanediol, 1-amino 2-propanol, 2-2'-amino éthoxy éthanol.

> *amines*

Comme amines, on peut mentionner entre autre l'ammoniaque, les amines alkyles primaires, secondaires, tertiaires (ex: méthylamine; diméthylamine; triméthylamine; diéthylamine), les amines grasses (ex : amines oléiques; amines alkyles de coco), les aminoalcools (ex : monoéthanolamine MEA; diéthanolamine DEA; triéthanolamine TEA; 3-amino 1,2-propanediol; 1-amino 2-propanol), les amines éthoxylées (2-2'-amino éthoxy éthanol; amino 1-méthoxy-3-propane).

Toutes ces amines peuvent être saturées ou non, linéaires ou ramifiées.

> catalyseurs

Parmi les catalyseurs ou adjuvants, on entendra à titre d'exemples non limitatifs les catalyseurs acides usuels (acide paratoluènesulfonique, acide sulfurique, acide phosphorique, acide perchlorique...), les catalyseurs basiques usuels (soude, potasse, alcoolate de métaux alcalins et de métaux alcalino-terreux, acétate de sodium, triéthylamines, dérivés de pyridine...), les résines acides et/ou basiques de type Amberlite™, Amberlyst™, Purolite™, Dowex™, Lewatit™, les zéolithes et les enzymes, les noirs de carbone et les fibres de carbone activées.

L'invention sera mieux comprise à la lecture de la description qui va suivre, et des exemples non limitatifs ci-dessous.

**EXEMPLES**

Les exemples ci-dessous mettent en valeur l'intérêt de l'invention et permettront à l'homme de métier d'extrapoler facilement à d'autres dimensions et / ou géométries, sans sortir du cadre de l'invention.

Les exemples suivants, nullement limitatifs, illustrent l'intérêt de l'invention. Ils visent à montrer que le procédé par chauffage diélectrique intermittent est économique et permet de chauffer des volumes réactionnels à l'échelle industrielle, tout en bénéficiant des avantages de cette technologie.

### I- Volumes exposés aux ondes électromagnétiques

Les essais sont réalisés à l'échelle laboratoire et industriel à l'aide de 2 générateurs :
- 1 générateur à magnétrons de 6kW fonctionnant à la fréquence de 2450MHz pour les traitements laboratoires
- 1 générateur à magnétrons de 60kW fonctionnant à la fréquence de 915MHz pour les traitements industriels

|  | D (mm) | H (mm) | Vexp unitaire | Nb réacteurs | Vexp total |
|---|---|---|---|---|---|
| Pilote | 30 | 45 | 32 mL | 1 | 32mL |
| Industriel | 100 | 124 | 1 L | 4 | 4L |

Avec :

D = diamètre des réacteurs cylindriques = 2R

H = hauteur du guide d'onde

Vexp unitaire = volume exposé en permanence aux ondes pour un réacteur

Vexp total= volume exposé en permanence aux ondes pour les réacteurs

$$V \text{ (exposé au champ)} = \Pi * R^{2}*H$$

### II- Comparaison entre le chauffage classique et le chauffage diélectrique intermittent

### a- synthèse de polyglycérol

Les essais sont réalisés à 260°C, en présence de 2% d'acétate de sodium de manière à obtenir un polyglycérol de viscosité à 50°C égale à 3600cP.
Ils font référence à la demande de brevet FR N°0108906.

|  |  | V total de glycérol | Rapport V | Temps réactionnel |
|---|---|---|---|---|
| Chauffage diélectrique intermittent | pilote | 2 000mL | 1/62 | 3h |
|  | industriel | 200 L | 1/50 | 6h30 |
| Chauffage classique | Schou |  |  | >72h |

Avec :

V total de glycérol = volume total de glycérol traité

Rapport V = rapport entre le volume exposé aux ondes et le volume total traité

### b- synthèse de esters de polyglycérol

### Synthèse de diolétate de polyglycérol-6

Les essais sont réalisés en présence de 0.25% d'acétate de sodium à 230°C.
Ils font référence à la demande de brevet FR N°0108906.

|  | V total du mélange | Rapport V | Temps réactionnel |
|---|---|---|---|
| Chauffage diélectrique intermittent | 2 000mL | 1/62 | 2h10 |

(suite)

|  | V total du mélange | Rapport V | Temps réactionnel |
|---|---|---|---|
| Chauffage classique |  |  | 4h30 |

Avec :

V total du mélange = volume total traité

Rapport V = rapport entre le volume exposé aux ondes et le volume total traité

### Synthèse de tristéarate de polyglycérol-2

Les essais sont réalisés en présence de 0.25% d'acétate de sodium à 260°C

Ils font référence à la demande de brevet FR N°0108906.

|  | V total du mélange | Rapport V | Temps réactionnel |
|---|---|---|---|
| Chauffage diélectrique intermittent | 2 000mL | 1/62 | 1 h40 |
| Chauffage classique |  |  | 4-5h |

Avec :

V total du mélange = volume total traité

Rapport V = rapport entre le volume exposé aux ondes et le volume total traité

### c- Conclusion :

Même si tout le volume réactionnel n'est pas exposé aux ondes électromagnétiques, les temps réactionnels sous chauffage diélectrique intermittent sont nettement plus faibles que ceux obtenus par chauffage classique.

### III- Comparaison entre le chauffage diélectrique intermittent et le chauffage diélectrique permanent

### a- efficacité du chauffage diélectrique intermittent

Le tableau ci-dessous montre l'efficacité du chauffage diélectrique intermittent par rapport au chauffage diélectrique permanent, traditionnellement utilisé.

Les essais sont réalisés dans les mêmes conditions (composition des mélanges réactionnels, températures, catalyseurs...)

- à l'échelle laboratoire (utilisation d'un synthewave 402) qui utilise le chauffage diélectrique permanent,

- à l'échelle pilote à l'aide d'un générateur 2450 MHz qui utilise le chauffage diélectrique intermittent

- et à l'échelle production à l'aide d'un générateur 915 MHz qui utilise le chauffage diélectrique intermittent

La synthèse testée consiste à fabriquer des polymères d'acides gras insaturés, d'esters d'acides gras insaturés, d'hydrocarbures insaturés, de dérivés insaturés de ces composés, seuls ou en mélange.

|  | Laboratoire | Pilote |  | Industriel |  |
|---|---|---|---|---|---|
|  | MOp | MOi | Mop extrapolé | MOi | Mop extrapolé |
| Vtraité (mL) | 25 | 2000 | 2000 | 200000 | 200000 |
| RapportV | 1/1 | 1/62 | 1/1 | 1/50 | 1/1 |

(suite)

| | Laboratoire | Pilote | | Industriel | |
|---|---|---|---|---|---|
| | MOp | MOi | Mop extrapolé | MOi | Mop extrapolé |
| t réaction (h) | 2h15 | 2h15 | ≥ 2h15** | 2h15 | ≥ 2h15** |

Avec :

Mop = chauffage micro-ondes permanent

Mop extrapolé = chauffage micro-ondes permanent dans le cas d'un traitement de 200kg de produit.

Moi = chauffage micro-ondes intermittent

Vtraité = volume réactionnel traité

Rapport V = rapport entre le volume exposé aux ondes électromagnétiques et le volume total réactionnel

t réaction = temps réactionnel

** : traiter une grande quantité de produits demande un temps réactionnel supérieur ou égal à celui correspondant à une plus faible quantité. Le temps réactionnel est de 2h15 pour 25mL de produit. Aussi, on peut dire qu'il faudra un temps réactionnel supérieur ou égal à 2h15 pour traiter 200kg du même mélange.

Ce tableau montre que les temps réactionnels sont inchangés que l'on travaille sur 25mL, 2kg ou 200kg. Pourtant dans le cas des essais pilote et industriel (2kg et 200kg), tout le volume n'est pas soumis au chauffage diélectrique :

- essai laboratoire (chauffage diélectrique permanent) : tout le volume est exposé aux ondes électromagnétiques avec Rapport = 1/1

- essai pilote (chauffage diélectrique intermittent) : seulement 1/62 du volume est exposé au champ.

- essai industriel (chauffage diélectrique intermittent) : seulement 1/50 du volume est exposé au champ

### b- diminution des coûts d'investissement

S'il fallait traiter 200 litres de produit à l'aide d'un chauffage diélectrique permanent, il faudrait exposer les 200 litres aux ondes électromagnétiques.
En travaillant à la fréquence de 2450MHz, le volume maximum exposé par applicateur est de 32mL. Cette configuration n'est pas ici avantageuse. Il faudrait en effet 6250 applicateurs.
En travaillant à la fréquence de 915MHz, le volume maximum exposé par applicateur est de 1L. Il faudrait donc 200 applicateurs
Pour la présente invention, le chauffage diélectrique intermittent permet de n'utiliser que 4 applicateurs, soit 50 fois moins (rapport conforme à celui donné dans le tableau précédent) pour la même capacité de production.
On peut comparer les coûts d'investissements :

X = coût d'investissement d'un système avec chauffage diélectrique intermittent, 4 voies, recirculation

Y = coût d'investissement d'un système avec chauffage diélectrique permanent, 200 voies, sans recirculation

Y=10*X

Le coût d'investissement serait donc 10 fois plus élevé dans le cas d'un chauffage diélectrique permanent comparé au chauffage diélectrique intermittent. Cela vient essentiellement du coût des applicateurs, nettement supérieur au reste de l'installation (réacteur tampon, pompe...)

**Revendications**

1. Procédé de traitement thermique impliqué dans une synthèse chimique, du type diélectrique, **caractérisé en ce que** ledit chauffage diélectrique est mis en œuvre de manière intermittente c'est-à-dire que le ou les réactifs sont soumis à des ondes électromagnétiques de manière intermittente, en combinaison avec un système de recirculation.

2. Procédé selon la revendication 1 **caractérisée en ce que** les ondes électromagnétiques sont choisies dans les fréquences allant de 300GHz à 3MHz.

3. Procédé selon la revendication 2 **caractérisée en ce que** les fréquences sont choisies parmi :
   ➢ *Les fréquences MO et HF*

   - les fréquences micro-ondes MO qui sont comprises entre environ 300 MHz et environ 30 GHz, préférentiellement à 915 MHz (fréquence autorisée avec une tolérance de 1.4%) ou à 2.45 GHz (fréquence autorisée avec une tolérance de 2%).
   - les hautes fréquences HF qui sont comprises entre environ 3 MHz et environ 300MHz, préférentiellement à 13.56 MHz (fréquence autorisée avec une tolérance de 0.05%) ou à 27.12 MHz (fréquence autorisée avec une tolérance de 0.6%).

4. Procédé selon l'une quelconque des revendications 1 à 3 **caractérisé en ce que** tout le volume réactionnel n'est pas exposé en permanence aux ondes diélectriques mais que toutes les molécules du mélange réactionnel sont de manière intermittente soumises au champ.

5. Procédé selon l'une quelconque des revendications 1 à 4 **caractérisé en ce que** le ou les réactifs peuvent être choisis parmi les produits absorbants peu les ondes électromagnétiques ou les produits absorbants beaucoup ou un mélange des deux, additivés ou non d'un ou de plusieurs catalyseurs ou adjuvants absorbant peu ou beaucoup et/ou de gaz de process.

6. Procédé selon la revendication 5 **caractérisé en ce que** le ou les réactifs sont choisis parmi :

   ➢ *huiles d'origine végétale*
   l'huile de colza, l'huile de tournesol, l'huile d'arachide, l'huile d'olive, l'huile de noix, l'huile de maïs, l'huile de soja, l'huile de lin, huile de carthame, huile de noyaux d'abricot, l'huile d'amande douce, l'huile de chanvre, l'huile de pépins de raisin, l'huile de coprah, l'huile de palme, l'huile de graine de coton, l'huile de babassu, l'huile de jojoba, l'huile de sésame, l'huile d'argan, l'huile de chardon marie, huile de pépins de courge, huile de framboise, l'huile de Karanja, l'huile de Neem, l'huile d'oeillette, l'huile de noix du Brésil, l'huile de ricin, l'huile de ricin déshydratée, l'huile de noisette, l'huile de germe de blé, l'huile de bourrache, l'huile d'onagre, l'huile de Tung, l'huile de tall ou « tall oil ».
   ➢ *huiles ou graisses d'origine animale*
   l'huile de cachalot, l'huile de dauphin, l'huile de baleine, l'huile de phoque, l'huile de sardine, l'huile de hareng, l'huile de squale, l'huile de foie de morue, l'huile de pied de bœuf, les graisses de bœuf, de porc, de cheval, de mouton (suifs).
   ➢ *composants d'huiles animales ou végétales*
   le squalène extrait des insaponifiables des huiles végétales (l'huile d'olive, l'huile d'arachide, l'huile de colza, l'huile de germe de maïs, l'huile de coton, l'huile de lin, l'huile de germe de blé, l'huile de son de riz) ou bien contenu en grande quantité dans l'huile de squale.
   ➢ *hydrocarbures*

   insaturés : seul ou en mélange, un alcène, par exemple un ou des hydrocarbures terpéniques, c'est à dire un ou des polymères de l'isoprène, ou un ou des polymères de l'isobutène, du styrène, de l'éthylène, du butadiène, de l'isoprène, du propène, ou un ou des copolymères de ces alcènes.
   saturés les alcanes, par exemple l'éthane, le propane.

   ➢ *esters saturés et/ou insaturés*
   seul ou en mélange un ou des esters obtenus par estérification entre un monoalcool et/ou polyol et au moins un acide gras saturé et/ou insaturé ; des cires ; des beurres, des phospholipides ; des spingolipides ; des glucolipides.
   ➢ *acides saturés et/ou insaturés*

seul ou en mélange un ou des acides saturés comme l'acide caprylique, l'acide laurique, l'acide myristique, l'acide palmitique, l'acide stéarique, l'acide arachidique, l'acide béhénique, l'acide lignocérique, l'acide cérotique, un ou des acides gras monoinsatirés comme l'acide oléique, l'acide palmitoléique, l'acide myristique, l'acide pétrosélénique, l'acide érucique ; un ou des acides gras polyinsaturés comme par exemple l'acide linoléique, les acides alpha et gamma linolénique, l'acide arachidonique ; l'EPA acide eicosapenten-5c- 8c-11c-14c-oïque, le DHA acide dodosahexen-4c-7c-10c-13c-16c-19c-oïque, un ou des acides comprenant des diènes conjugués ou des triènes conjugués comme l'acide licanique, les isomères des acides linoléiques et linoléniques ; un ou des acides comprenant un ou plusieurs groupes hydroxyles comme l'acide ricinoléique.

➢ alcools

le glycérol, le sorbitol, le sucrose, le mannitol, le xylitol, le néopentylglycol, le pentaérythritol, le saccharose, la galactose, le glucose, le maltose, le maltotriose, le fructose, le maltitol, le lactitol, le lactose, le ribose, le mellibiose, le cellobiose, le gentiobiose, l'altrose, le gulose, les polyalkylèneglycols, les polyglycérols, les polyphénols, les alkylpolyglucosides, les polyglucosides, le glycol, le pentaérythritol, l'éthane 1,2 diol, le 1,4 butanediol, 1,6 hexanediol, les aminoalcools (par exemple la diéthanolamine DEA la triéthanolamine TEA, 3-amino 1,2 propanediol), les époxyalcools, les alcools gras saturés ou insaturés (exemple : myristyl alcool, oleyl alcool, lauryl alcool), les alcools linéaires ou ramifiés, les vitamines (par exemple tocophérol, acide ascorbique, rétinol), les stérols (dont les phytostérols), les hémiacétals (par exemple 1-éthoxy -1-éthanol), les aminoalcools (par exemple 2-2'-amino éthoxy éthanol), les époxyalcools (par exemple 2-3 époxy-1-propanol), le propanol, l'éthanol, le méthanol, le tétradécyl alcool et leurs analogues

➢ époxydes

seul ou en mélange l'acide vernolique, l'acide cooronarique, 1,2-epoxy-9-décène, 3-4 époxy-1-butène, 2-3 époxy-1-propanol, des esters gras obtenus par estérification entre 2-3 époxy-1-propanol et un acide gras (par exemple Cardura E10®).

➢ aminoalcools

seul ou en mélange la monoéthanolamine MEA, la diéthanolamine DEA la triéthanolamine TEA, 3-amino 1,2 propanediol, 1-amino 2-propanol, 2-2'-amino éthoxy éthanol.

➢ amines

l'ammoniaque, les amines alkyles primaires, secondaires, tertiaires (ex: méthylamine; diméthylamine; triméthylamine; diéthylamine), les amines grasses (ex : amines oléiques; amines alkyles de coco), les aminoalcools (ex : monoéthanolamine MEA; diéthanolamine DEA; triéthanolamine TEA; 3-amino 1,2-propanediol; 1-amino 2-propanol), les amines éthoxylées (2-2'-amino éthoxy éthanol; amino 1-méthoxy-3-propane), ces amines pouvantt être saturées ou non, linéaires ou ramifiées.

**7.** Procédé selon la revendication 6 **caractérisé en ce que** les huiles et graisses d'origine animale ou végétale, ainsi que leurs dérivés, peuvent subir un traitement préalable visant à les rendre plus réactifs ou au contraire moins réactifs ( aussi bien un réactif isolé qu'un mélange réactionnel comportant deux ou plusieurs composants, ces mélanges réactionnels pouvant comporter des proportions équivalentes de chaque composant ou certains composants pouvant être majoritaires).

**8.** Procédé selon la revendication 6 ou 7 **caractérisé en ce que** les alcools ainsi que leurs dérivés peuvent subir un traitement préalable visant à les rendre plus réactifs ou au contraire moins réactifs comme par exemple l'hydrogénation, l'hydroxylation, l'époxydation, la phosphitation, lasulfonation.

**9.** Procédé selon l'une quelconque des revendications 1 à 8 **caractérisé en ce que** il emploie comme catalyseurs ou adjuvants:

➢ catalyseurs

les catalyseurs acides usuels (acide paratoluènesulfonique, acide sulfurique, acide phosphorique, acide perchlorique...), les catalyseurs basiques usuels (soude, potasse, alcoolate de métaux alcalins et de métaux alcalino-terreux, acétate de sodium, triéthylamines, dérivés de pyridine...), les résines acides et/ou basiques de type Amberlite™, Amberlyst™, Purolite™, Dowex™, Lewatit™, les zéolithes et les enzymes, les noirs de carbone et les fibres de carbone activées.

**10.** Procédé selon l'une quelconque des revendications 1 à 9 **caractérisé en ce que** le volume exposé aux ondes électromagnétique est :

avec

- 1 générateur à magnétrons de 6kW fonctionnant à la fréquence de 2450MHz pour les traitements laboratoires

- 1 générateur à magnétrons de 60kW fonctionnant à la fréquence de 915MHz pour les traitements industriels

|  | D (mm) | H (mm) | Vexp unitaire | Nombre de réacteurs | Vexp total |
|---|---|---|---|---|---|
| Pilote | 30 | 45 | 32 mL | 1 | 32mL |
| Industriel | 100 | 124 | 1 L | 4 | 4L |

Avec :

D = diamètre des réacteurs cylindriques = 2R
H = hauteur du guide d'onde
Vexp unitaire = volume exposé en permanence aux ondes pour un réacteur
Vexp total= volume exposé en permanence aux ondes pour les réacteurs

$$V \text{ (exposé au champ)} = \Pi * R^{2}*H$$

11. Dispositif pour la mise en oeuvre du procédé selon l'une quelconque des revendications 1 à 10 **caractérisé en ce que** il comprend ou est constitué :

- A

- de pompes
- de réacteurs soumis au champ électromagnétique
- d'un système diélectrique : applicateurs cheminées, guides d'ondes générateur, iris, piston de court circuit, systèmes de refroidissement
- de réacteurs tampon
- de bacs
- d'un circuit de gaz, préférentiellement de gaz inerte tel que l'azote
- de condenseurs
- d'appareils de mesure

- et notamment B

- de pompes

La ou les pompes sont à débit variable.
Il peut s'agir de pompe doseuse d'alimentation et/ou de pompe de recirculation et/ou de pompe à vide. Le débit de la pompe de recirculation influe sur le temps de passage d'une molécule sous les ondes.
Les pompes peuvent être choisies à titre indicatif parmi les pompes à palettes ou à piston.
- d'un ou de plusieurs réacteurs soumis aux ondes électromagnétiques

a) Les réacteurs soumis au champ électromagnétique n'absorbent pas les ondes (pyrex, quartz...).
b) Ils sont traditionnellement de forme cylindrique.
c) Ils sont positionnés à l'intérieur des applicateurs.

- d'un système diélectrique: applicateurs d'énergie, cheminées, guides d'ondes, générateur, iris, piston de court circuit, systèmes de refroidissement.

a) Les applicateurs sont formés de cavités monomodes qui résonnent à la fréquence d'émission selon un rayonnement dans le sens du guide d'onde.
b) Les cheminées empêchent les fuites d'ondes vers l'extérieur du guide d'onde. Elles sont préférentiellement de forme cylindrique conique, comme indiqué dans la demande de brevet FR N°0108906 du présent Demandeur pour limiter la présence d'arcs électriques.
c) Le ou les guides d'onde véhiculent les ondes électromagnétiques. Chaque guide d'onde peut être subdivisé en deux et seulement deux guides d'ondes.

d) Les générateurs utilisés sont des générateurs micro-ondes ou hautes fréquences

e) Les fréquences micro-ondes MO sont comprises entre environ 300 MHz et environ 30 GHz, préférentiellement à 915 MHz (fréquence autorisée avec une tolérance de 1.4%) ou à 2.45 GHz (fréquence autorisée avec une tolérance de 2%).

f) Les hautes fréquences HF sont comprises entre environ 3 MHz et environ 300MHz, préférentiellement à 13.56 MHz (fréquence autorisée avec une tolérance de 0.05%) ou à 27.12 MHz (fréquence autorisée avec une tolérance de 0.6%).

g) Les générateurs sont munis d'organe de sécurité qui laisse passer les ondes incidentes et fait dériver les ondes réfléchies vers une charge à eau où les ondes sont absorbées

h) Ils nécessitent également l'usage d'iris, de piston de court circuit pour atténuer la puissance réfléchie et favoriser l'absorption de la puissance émise par le générateur par le mélange réactionnel.

i) Le système est muni de systèmes de refroidissement pour éviter toute surchauffe.

- de réacteurs tampon
Les réacteurs tampon permettent de traiter une plus grande quantité de mélange réactionnel.
- de bacs
Le système est muni de bac(s) d'alimentation, de bac(s) recette, de bac(s) de filtration.
- de circuits de gaz
Les traitements thermiques sont réalisés sous une atmosphère normale ou riche en oxygène ou de préférence inerte.
- d'appareils de mesure
Le système est équipé d'appareils de mesure tels que des manomètres, des thermocouples, des débitmètres.

12. Dispositif selon la revendication 11 **caractérisé en ce que** le procédé peut être utilisé en dynamique ou continu.

13. Dispositif selon la revendication 11 ou 12 **caractérisé en ce que** il emploie comme applicateur d'énergie
➢ *type d'applicateurs d'énergie*

- Pour les applicateurs hautes fréquences, il s'agit essentiellement :

- d'applicateurs de type capacitif formés de deux armatures de condenseur entre lesquelles est appliquée la tension haute fréquence du générateur. Ils sont utilisés pour le traitement thermique de matériaux dont le volume constitue un parallélépipède dont l'un des côtés est suffisamment épais (>10mm).
- d'applicateurs à barreaux pour matériaux plans, constitués d'électrodes tubulaires ou en barres. Ils sont utilisés pour le traitement thermique de matériaux dont le volume constitue un parallélépipède dont l'un des côtés n'est pas suffisamment épais (<10mm).

d'applicateurs pour matériaux filiformes, formés de boucles.

- Pour les applicateurs micro-ondes, on peut citer :

- les applicateurs à champ localisé : cavité monomodale
- les applicateurs à champ diffus : cavité multimodale
- les applicateurs à champ proche : guide à antennes rayonnantes,

14. Dispositif selon l'une quelconque des revendications 11 à 13 **caractérisé en ce que**

- Le système « monomode » (champ localisé) qui est formé de cavités mono-modes résonnant à la fréquence d'émission selon un rayonnement dans le sens du guide, est préféré au « multimode » (champ diffus).
- L'applicateur est muni de cheminées cylindriques usuelles.
- Le dispositif comprend une bonne ventilation par de l'air humide ou par un autre gaz comparable au niveau de ses constantes diélectriques (exemple: hexafluorure de souffre SF6 sous 1 bar) ou des formes de cheminées adaptées de manière à évacuer l'électricité statique qui se forme sur la paroi externe du réacteur.

15. Dispositif selon l'une quelconque des revendications 11 à 14, **caractérisé en ce que** on emploie une géométrie de cheminée, notamment cheminée conique.

**16.** Dispositif selon l'une quelconque des revendications 11 à 15 **caractérisé en ce que** le réacteur est traditionnellement de forme cylindrique, son diamètre ne pouvant pas dépasser la largeur du guide d'onde.

**17.** Dispositif selon l'une quelconque des revendications 11 à 16 **caractérisé en ce que** dans le cas des applicateurs micro-onde monomode, sous 2450MHz, la largeur du guide d'onde préconisée pour rester en mode TE 0.1 (Transverse Electrique) se situe entre 70 et 100 mm environ, et plus particulièrement à 90mm.

**18.** Dispositif selon l'une quelconque des revendications 11 à 16 **caractérisé en ce que** dans le cas des applicateurs micro-onde monomode, sous 915MHz, la largeur du guide d'onde préconisée pour rester en mode TE 0.1 (Transverse Electrique) se situe vers 250mm.

**19.** Dispositif selon l'une quelconque des revendications 11 à 18 **caractérisé en ce que** le système diélectrique comporte des applicateurs, cheminées, guides d'ondes, générateur, iris, piston de court circuit, systèmes de refroidissement, comme suit :

- Les applicateurs sont formés de cavités monomodes qui résonnent à la fréquence d'émission selon un rayonnement dans le sens du guide d'onde.
- Les cheminées empêchent les fuites d'ondes vers l'extérieur du guide d'onde. Elles sont préférentiellement de forme cylindrique conique, comme indiqué dans la demande de brevet FR N°0108906 du présent Demandeur pour limiter la présence d'arcs électriques.
- Le ou les guides d'onde véhiculent les ondes électromagnétiques. Chaque guide d'onde peut être subdivisé en deux et seulement deux guides d'ondes.
- on fait également l'usage d'iris, de piston de court circuit pour atténuer la puissance réfléchie et favoriser l'absorption de la puissance émise par le générateur par le mélange réactionnel.

**20.** Procédé et Dispositif selon l'une quelconque des revendications 1 à 19 **caractérisé en ce que** les traitements thermiques sont réalisés sous une atmosphère normale ou riche en oxygène ou de préférence inerte.

**21.** Applications du procédé selon l'une quelconque des revendications 1 à 10 et 20 et du dispositif selon l'une quelconque des revendications 11 à 19 dans toutes les « applications thermiques » c'est-à-dire les synthèses chimiques impliquant un traitement thermique et qui font intervenir un seul réactif, ou un mélange de réactifs, en proportions variables, avec ou sans catalyseurs, avec ou sans gaz de « process ».

**22.** Applications selon la revendication 21 **caractérisées en ce que** en tant qu' « applications thermiques », on peut citer, à titre d'exemples non limitatifs, les réactions d'estérification, transestérification, époxydation, sulfatation, phosphitation, hydrogénation, peroxydation, isomérisation, déshydratation, quaternisation, amidification, polymérisation, polycondensation, et tous les traitements usuels comme la décoloration, la désodorisation et les autres systèmes d'élimination de composés volatils.

**23.** Applications du procédé selon l'une quelconque des revendications 1 à 10 et 21 et du dispositif selon l'une quelconque des revendications 11 à 19 à toutes les réactions de la « lipochimie ».

**24.** Applications du procédé selon l'une quelconque des revendications 1 à 10 et 21 et du dispositif selon l'une quelconque des revendications 11 à 19 pour fabriquer des polymères d'acides gras insaturés, d'esters d'acides gras insaturés, d'hydrocarbures insaturés ou de dérivés de ces produits à l'aide d'un chauffage diélectrique intermittent sous micro-ondes.

**25.** Applications particulières du procédé selon l'une quelconque des revendications 1 à 10 et 21 et du dispositif selon l'une quelconque des revendications 11 à 19 à la synthèse de :

polyglycérol
esters de polyglycérol
diolétate de polyglycérol-6
tristéarate de polyglycérol-2

# FIGURE 1

réacteur tampon

réacteurs soumis aux ondes

applicateurs et cheminées

générateur

pompe de recirculation

# FIGURE 2

réacteur tampon

réacteurs soumis aux ondes

applicateurs et cheminées

générateur

pompe de recirculation

# FIGURE 3

vers le bac de recette

1 réacteur soumis aux ondes

x applicateurs et cheminées

générateur

pompe

issu du bac d'alimentation

# FIGURE 4

réacteur soumis aux ondes

guide d'ondes

générateur

Europäisches
Patentamt

European
Patent Office

Office européen
des brevets

# RAPPORT DE RECHERCHE EUROPEENNE

Numéro de la demande

**EP 22 16 4827**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 992 480 A (UCB) 12 avril 2000 (2000-04-12) * alinéas [0013], [0024], [0032], [0034]; revendications * * page 4, ligne 30 * * page 4, ligne 52 – ligne 55 * ----- | 1-25 | INV. H05B6/80 H05B6/62 B01J19/12 B01J19/24 |

**DOMAINES TECHNIQUES RECHERCHES (IPC)**

H05B
B01J

Le présent rapport a été établi pour toutes les revendications

| Lieu de la recherche | Date d'achèvement de la recherche | Examinateur |
|---|---|---|
| Munich | 2 septembre 2022 | Serra, Renato |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 16 4827

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-09-2022

| Document brevet cité au rapport de recherche | | Date de publication | Membre(s) de la famille de brevet(s) | | Date de publication |
|---|---|---|---|---|---|
| EP 0992480 | A | 12-04-2000 | CA | 2285757 A1 | 09-04-2000 |
| | | | EP | 0992480 A1 | 12-04-2000 |
| | | | JP | 2000119216 A | 25-04-2000 |
| | | | US | 6175037 B1 | 16-01-2001 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 9813770
- WO 0026265 A
- FR 9902646 W
- FR 0108906